# EUROPÄISCHE PATENTANMELDUNG

(11) **EP 3 939 411 A2**
(43) Veröffentlichungstag der Anmeldung: **19.01.2022**
(21) Anmeldenummer: 21181326.6
(22) Anmeldetag: 24.06.2021
(51) Int. Cl.: A01D 43/14, A01D 43/12, A01D 34/00, A01D 34/43, A01D 34/42, A01C 15/00, A01C 15/06, A01B 33/02, A01B 45/02

(54) **VORRICHTUNG UND VERFAHREN ZUM BEARBEITEN VON BODENFLÄCHEN**

(30) Priorität: 15.07.2020 DE 102020118660
(71) Anmelder: Müthing GmbH & Co. KG, 59955 Winterberg (DE)
(72) Erfinder: Arnold, Martin, 38275 Steinlah (DE); Henkel, Simon, 57392 Schmallenberg (DE); Zurhake, Christian, 59581 Niederbergheim (DE); Müthing, Michael, 59955 Winterberg (DE)
(74) Vertreter: Lichti - Patentanwälte Partnerschaft mbB

(57) **Zusammenfassung**

Zur Erweiterung der Einsatzmöglichkeiten einer landwirtschaftlichen Arbeitsvorrichtung, wie eines Mulchers, mit einem Schlegel aufweisenden Rotor sieht die Erfindung vor, dass neben dem Rotor eine Ausbringeinrichtung zum Ausbringen von flüssigem oder festem wie körnigem Ausbringgut angeordnet ist, wobei insbesondere weiterhin vorgesehen sein kann, dass entlang einer Haupt-Querachse des Rotors zwischen dessen Schlegeln sich radial über die Schlegel hinauserstreckende Vertikutierelemente angeordnet sind.

## Beschreibung

Die Erfindung betrifft eine Vorrichtung zum Bearbeiten von Bodenflächen, wie Mulcher, insbesondere zur land- und/oder forstwirtschaftlichen Bodenbearbeitung und zur Grün- sowie Brachflächenpflege, mit einem Schlegel aufweisenden Rotor und ein Verfahren zum Bearbeiten von Bodenflächen, wie mulchen mittels eines Mulchers, insbesondere von land- und forstwirtschaftlicher Boden- sowie Grün- und Brachflächen mittels eines mit Schlegeln versehenen Rotors.

Derartige Arbeitsvorrichtungen sind insbesondere als Mulchervorrichtungen ausgebildet und haben hierzu einen Schlegel aufweisenden Rotor. Mittels der Schlegel wird Grünmasse oberhalb des Bodens, auf dem sich die Arbeitsvorrichtung bewegt, abgetrennt und zerkleinert, wobei eine bodennahe radial gerichtete und radial verstellbare Schneideinrichtung unterstützend wirken kann. Die abgetrennte Grünmasse wird als Mulchgut um einen Teilumfang des Rotors gefördert und dabei gegen vorrichtungs- bzw. gehäusefeste Gegenmesser geschleudert bzw. bewegt. Die Grünmasse wird durch das Zusammenwirken der Schlegel und der Gegenmesser weiter zerkleinert. Anschließend wird die Grünmasse als Mulchgut in Fahrtrichtung hinter dem Rotor abgelegt, wobei das Ablegen durch ein Leitblech unmittelbar hinter dem Rotor oder aber bei veränderter Stellung des Leitbleches in größerer Entfernung, insbesondere hinter mindestens einer Stützwalze oder Stützrädern erfolgen kann.

Derartige Arbeitsvorrichtungen sind insbesondere in den folgenden Druckschriften beschrieben, auf die ausdrücklich Bezug genommen wird: EP 1 782 660 A1, EP 2 997 802 A2, EP 3 479 677 A1 und EP 3 449 710 A1.

Die Bodenverbesserung, Bodenaktivierung, Humusanreicherung und Nutzung von biologischen Nährstoffkreisläufen durch Mulchen von Bodenbewuchs, Grünmassen, wie z. Bsp. Zwischenfrüchten, und von Ernteresten und Biomassen generell gewinnt insbesondere in der Landwirtschaft, vor allem in naturnaher, regenerativer und biologischer, aber auch in integrativer Landbewirtschaftung sowie in der Grünflächen- und Brachflächenpflege immer größere Bedeutung. Hierdurch soll der Einsatz von chemischen Pflanzenschutzmitteln zur Reduzierung von Schädlingsbefall der Nutzpflanzen vermindert oder sogar vermieden und der Einsatz von künstlichem Mineraldünger reduziert werden und insgesamt eine Steigerung der Resilienz der Böden sowie der Flora und Fauna erzielt werden. Dies dient im Ergebnis auch dem Erhalt bzw. der Steigerung der Biodiversität und der allgemeinen Resilienz dieser Naturräume.

Bei den für diese Zwecke eingesetzten Mulchervorrichtungen ist es zumindest sehr mühsam, weitere separate Arbeitsgänge mit anderen Funktionalitäten und entsprechenden separaten Geräten in einem Arbeitsgang vorzusehen bzw. durchzuführen. Dies gilt insbesondere für das Aus- und Einbringen von Dünger in flüssiger oder fester Form wie Gülle, Harnstoff oder Düngerpellets, das Einsäen von körnigem Saatgut, das Ausbringen von anderen natürlichen Wirkstoffen oder auch, soweit notwendig, von chemischen Pflanzenschutzmitteln sowohl in flüssiger als auch fester Form und in Mischungen derselben.

Der Erfindung liegt daher die Aufgabe zugrunde, eine gattungsgemäße Vorrichtung für land- und forstwirtschaftliche Zwecke sowie zur Grünflächenpflege allgemein zu erweitern bzw. mit weiteren Funktionalitäten auszustatten sowie ein entsprechendes Arbeitsverfahren zu schaffen.

Erfindungsgemäß wird die genannte Aufgabe bei einer gattungsgemäßen Vorrichtung dadurch gelöst, dass neben dem Rotor mindestens eine Ausbringeinrichtung zum Ausbringen von flüssigem und/oder festem wie körnigem Ausbringgut angeordnet ist.

Weiterhin wird die der Erfindung zugrundeliegenden Aufgabe bei einem gattungsgemäßen Verfahren dadurch gelöst, dass dass in einer einheitlichen Arbeitsfolge flüssiges oder festes, wie körniges Ausbringgut auf die Bodenfläche aufgebracht wird durch mindestens eine Ausbringeinrichtung neben dem Rotor und zerkleinerte Grünmasse als Mulchgut auf der Bodenfläche abgelegt wird. In bevorzugten Ausgestaltungen ist dabei vorgesehen, dass die mindestens eine Ausbringeinrichtung innerhalb eines Mulchergehäuses neben dem Rotor angeordnet ist und/oder dass die mindestens eine Ausbringeinrichtung im Bereich der vertikalen Höhe des Rotors angeordnet ist.

Die Ausbringeinrichtung(en) ist/sind neben dem Rotor in Fahrtrichtung angeordnet, also vor oder hinter dem Rotor.

Alternativ kann vorgesehen sein, dass zunächst das Ausbringgut auf der Bodenfläche aufgebracht wird und sofort anschließend die zerkleinerte Grünmasse als Mulchgut auf dem aufgebrachten Austragsgut zur Abdeckung desselben abgelegt wird, oder dass zunächst das Mulchgut auf der Bodenfläche abgelegt wird und unmittelbar anschließend das Aufbringgut auf den abgelegten Mulchgut aufgebracht wird.

In Weiterbildung des Verfahrens ist dabei vorgesehen, dass als körniges und/oder flüssiges Ausbringgut wie z.B. flüssiger oder körniger Dünger, chemische Pflanzenschutzmittel, Saatgut oder dergleichen ausgebracht werden.

Durch das erfindungsgemäße Versehen einer gattungsgemäßen Arbeitsvorrichtung mit einer Ausbringeinrichtung zum Ausbringen von flüssigem und/oder körnigen Ausbringgut wird die Funktionalität der Arbeitsvorrichtung gesteigert und es werden insbesondere zusätzliche Arbeitsschritte vermieden, wobei die beiden Funktionalitäten Mulchen mittels des Rotors und Ausbringen von Ausbringgut durch die erfindungsgemäße Ausbildung der Arbeitsvorrichtung und Ausführung der Funktionalitäten in einem Arbeitsgang verbesserte insbesondere auch synergistische Wirkungen erzielen kann.

Insbesondere wird das Mulchgut nach dem Aufbringen des Ausbringguts auf dem Boden wieder abgelegt und damit auf dem Ausbringgut, schützt dieses und kann, soweit es sich um Wirkstoffe, wie Dünger, handelt, die Wirkung verbessern. Bodenerosion wird durch das Aufbringen von Mulchgut vermieden bzw. reduziert.

In einer bevorzugten Ausgestaltung der erfindungsgemäßen Vorrichtung ist vorgesehen, dass die Ausbringeinrichtung sich entlang einer Haupt-Querachse des Rotors erstreckt, wobei insbesondere die Ausbringeinrichtung Ausbringelemente mit Ausbringöffnungen aufweist.

In einer ersten bevorzugten Ausgestaltung der erfindungsgemäßen Vorrichtung kann vorgesehen sein, dass die Ausbringöffnungen der Ausbringelemente eine seitlich/horizontal gerichtete Hauptkomponente aufweisen. In einfacher Ausgestaltung und Anordnung kann in diesem Falle weiterhin vorgesehen sein, dass die Ausbringöffnung der Ausbringelemente gegen Leitbleche für von der Arbeitsvorrichtung aufgenommene und zerkleinerte Biomasse unter einem endlichen Winkel ungleich 0 und ungleich 90° gerichtet sind.

Eine alternative Ausgestaltung der erfindungsgemäßen Vorrichtung zeichnet sich dadurch aus, dass die Ausbringöffnungen der Ausbringelemente eine nach unten/vertikal gerichtete Hauptkomponente aufweisen. Eine weitere bevorzugte Ausgestaltung der erfindungsgemäßen Vorrichtung unter Ermöglichung beider Ausrichtungen der Ausbringöffnungen sieht vor, dass die Ausbringeinrichtung einen sich entlang der Haupt-Querachse erstreckenden nach unten offenen Tunnel oder Kasten mit vorderer und hinterer Seitenwand und oberer Deckwand aufweist. Die Ausbringöffnungen der Ausbringelemente können dabei insbesondere als Düsen ausgebildet sein, wenn flüssiges Ausbringgut ausgebracht werden soll. Bei einer im Wesentlichen horizontalen bzw. seitlich gerichteten Hauptkomponente der Ausbringöffnungen ist in Weiterbildung vorgesehen, dass die Ausbringelemente gegen die dem Rotor zugewandte (vordere) Seitenwand des nach unten offenen Tunnels gerichtet sind, wobei alternativ allerdings auch vorgesehen sein kann, dass die Ausbringelemente gegen die dem Rotor abgewandte (rückwärtige) Seiten des Tunnels gerichtet sind.

Das Ausbringgut wird von der erfindungsgemäßen Vorrichtung in einem oder mehreren Teilen derselben bildenden Vorratsbehälter(n) mitgeführt, wobei in bevorzugter Ausgestaltung dann vorgesehen ist, dass die Ausbringeinrichtung, insbesondere deren Ausbringelemente über Leitungen, wie Schläuche, mit mindestens einem Vorratsbehälter verbunden sind.

Eine weitere äußerst bevorzugte Ausgestaltung der Erfindung sieht vor, dass entlang einer Haupt-Querachse des Rotors zwischen dessen Schlegeln sich radial über die Schlegel hinauserstreckende Vertikutierelemente angeordnet sind, wobei insbesondere die Vertikutierelemente sich senkrecht zur Haupt-Querachse erstreckende Vertikutiermesser aufweisen. Es kann vorgesehen sein, dass an einem Vertikutierelement mindestens zwei, vorzugsweise drei parallel zueinander angeordnete, senkrecht zur Haupt-Querachse gerichtete Vertikutiermesser/-schneiden ausgebildet sind, die durch zumindest zum Teil geneigt zu dem Vertikutiermesser/-schneiden verlaufende Verbindungsbereiche miteinander verbunden sind. Dann ist die erfindungsgemäße Vorrichtung derart ausgestaltet, dass der Rotor einen Mulch-Vertikutier-Rotor bildet.

Weitere Vorteile und Merkmale der Erfindung ergeben sich aus den Ansprüchen und aus der nachfolgenden Beschreibung, in der Ausführungsbeispiele der erfindungsgemäßem Arbeitsvorrichtung unter Bezugnahme auf die Zeichnung im Einzelnen erläutert sind. Dabei zeigt:
- Fig. 1: eine Perspektivansicht auf die erfindungsgemäße Vorrichtung von schräg vorne (ohne Verbindungselemente zu einer Zugmaschine);
- Fig. 2: eine Seitenansicht auf die Arbeitsvorrichtung nach Fig. 1 mit Sicht unter einem Winkel von etwa 15° zur Erstreckungsrichtung der Haupt-Querachse des Rotors bei fortgelassener Seitenwand;
- Fig. 3: eine Perspektivsicht unmittelbar auf den Rotor der Arbeitsvorrichtung der Fig. 1;
- Fig. 4: eine vergrößerte Seitenansicht im Wesentlichen auf die Funktionselemente einer ersten Ausgestaltung der erfindungsgemäßen Arbeitsvorrichtung gemäß Fig. 1 mit hochgeklapptem Leitblech;
- Fig. 5: eine vergrößerte Seitenansicht im Wesentlichen auf die Funktionselemente einer ersten Ausgestaltung der erfindungsgemäßen Arbeitsvorrichtung gemäß Fig. 4 mit herabgeklapptem Leitblech;
- Fig. 6: eine weitere vergrößerte Seitenansicht im Wesentlichen auf die Funktionselemente einer ersten Ausgestaltung der erfindungsgemäßen Arbeitsvorrichtung gemäß Fig. 1 mit hochgeklapptem Leitblech;
- Fig. 7: eine weitere vergrößerte Seitenansicht im Wesentlichen auf die Funktionselemente einer ersten Ausgestaltung der erfindungsgemäßen Arbeitsvorrichtung gemäß Fig. 6 mit herabgeklapptem Leitblech; und
- Fig. 8: eine perspektivische Außenansicht des Tunnels zum Anbringen des Ausbringguts mit Anschlüssen für Zuführleitungen aufweisenden Ausbringelementen.

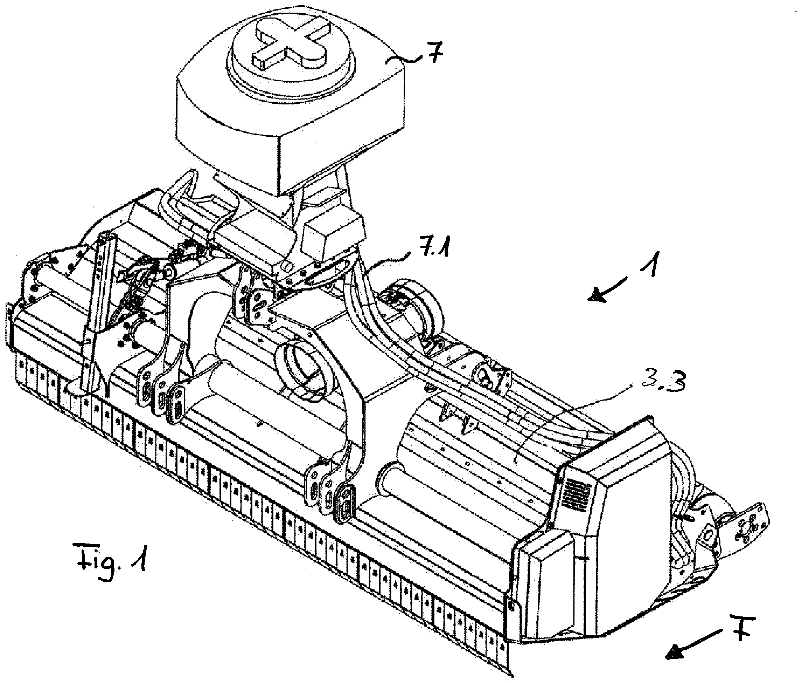

Die Fig. 1 zeigt eine erfindungsgemäße Vorrichtung 1 in Form eines Mulchers zur Bearbeitung von Erdbodenflächen, wie insbesondere zum landwirtschaftlichen, aber auch zum forstwirtschaftlichen Einsatz und zur Flächenpflege, insbesondere zur Bearbeitung von bodennaher Grün- und Biomasse.

Die Vorrichtung 1 kann in herkömmlicher Weise mit einem Zuggerät, wie einem Traktor, über Verbindungselemente (nicht dargestellt) verbunden werden, die letztere in einer bevorzugten Ausgestaltung beispielsweise in der EP 1 266 551 A2 dargestellt und beschrieben sind und in der Regel die Vorrichtung in Haupt-Fahrrichtung F zieht, aber auch entgegen dieser Richtung schieben kann.

Die Vorrichtung weist weiterhin zur Abstützung Stützwalzen oder Stützräder 2 auf, die insbesondere auf der dem Zuggerät abgewandten Seite der Vorrichtung 1 angeordnet sind. Die Stützwalzen oder Stützräder können vorzugsweise verstellbar ausgebildet sein, beispielsweise wie dies in der EP 2 997 802 A2 beschrieben ist.

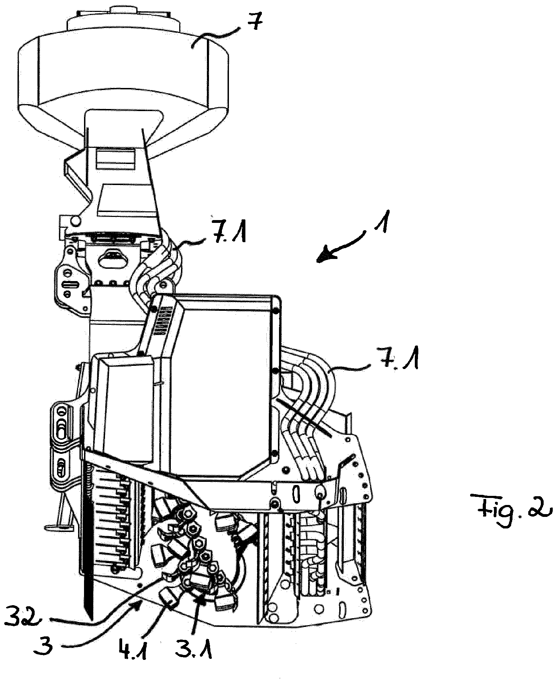

Die Vorrichtung 1 weist primär eine Mulcheinheit 3 (Fig. 2ff) mit um eine sich senkrecht zur Fahrtrichtung der Vorrichtung 1 (und des sie ziehenden Zuggeräts) erstreckenden Haupt-Querachse A drehbaren Rotor 3.1 auf. Am Umfang des Rotors sind - insbesondere beschränkt beweglich - Schlegel 3.2 angeordnet. Diesen sind an einer vorrichtungsfesten ein Mulchergehäuse 3.3 bildenden Abdeckung angeordnete gehäusefeste Gegenschneiden oder -messer 3.4 zum Zerkleinern der Grünmasse zugeordnet. Im Einzelnen wird hierzu beispielhaft auf die EP 1 782 680 A1 verwiesen. Auf der - dem Zuggerät - zugewandten Eintragseite des Rotors 3.1 der Mulcheinheit 3 findet sich weiterhin - gehäusefest - eine im Wesentlichen radial zum Rotor 3.1 der Mulcheinheit 3 gerichtete und vorzugsweise in ihrer Erstreckungsrichtung verstellbare Schneideinrichtung 3.5, wie sie beispielhaft in der EP 2 997 802 A2, aber auch der EP 3 449 710 A1 und der EP 3 479 677 A1 dargestellt und beschrieben ist.

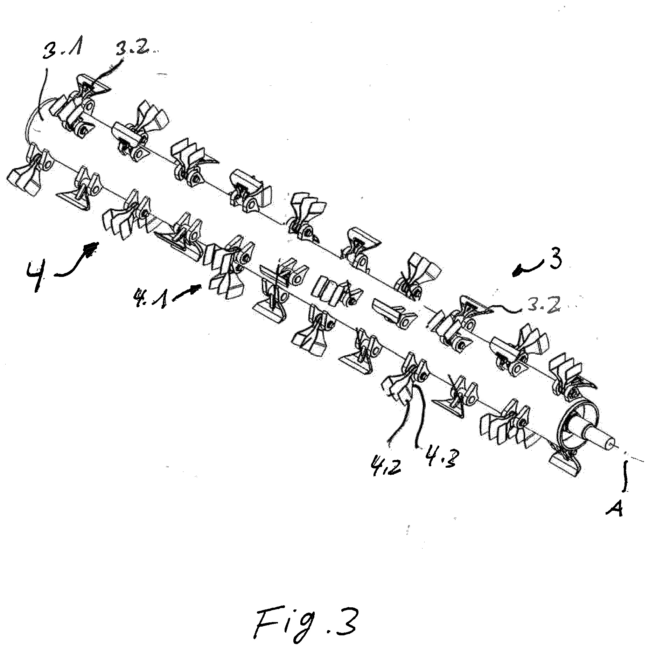

Wie insbesondere der Fig. 3 zu entnehmen ist, finden sich in den dargestellten Ausführungsbeispielen zwischen den Schlegeln 3.2 des Rotors 3 entlang der Achse A desselben Vertikutierelemente 4.1, die insgesamt eine Vertikutiereinheit 4 bilden. Demgemäß bildet der Rotor 3.1 im Hinblick auf die an ihm umlaufenden Schlegel 3.2 und die Vertikutierelemente 4.1 einen kombinierten Mulch-Vertikutier-Rotor. Die Vertikutierelemente 4.1 weisen im dargestellten Ausführungsbeispiel jeweils drei fest über Verbindungsbereiche 4.3 verbundene, parallel zueinander gerichtete Vertikutiermesser oder -schneiden 4.2 auf.

Die Vertikutierelemente 4.1 überragen die Schlegel 3.2 radial und weisen senkrecht zur Achse A gerichtete Vertikutiermesser 4.2 auf - während die Haupterstreckungsrichtung der Schlegel 3.2 parallel zur Achse A gerichtet ist.

Während die Schlegel 3.2 Grün- oder Biomasse auf bzw. oberhalb des Bodens, auf welcher sich die Vorrichtung 1 bewegt, abschneiden und aufnehmen, dringen die Vertikutiermesser 4.2 der Vertikutierelemente 4.1 in den Boden ein, ritzen die Grünmassennarbe (Grasnarbe) an, lockern und entfernen auf dem Boden aufliegendes altes Schnittgut und Moos (welches von den Schlegeln aufgenommen werden kann) und bewirken eine Belüftung des Bodens.

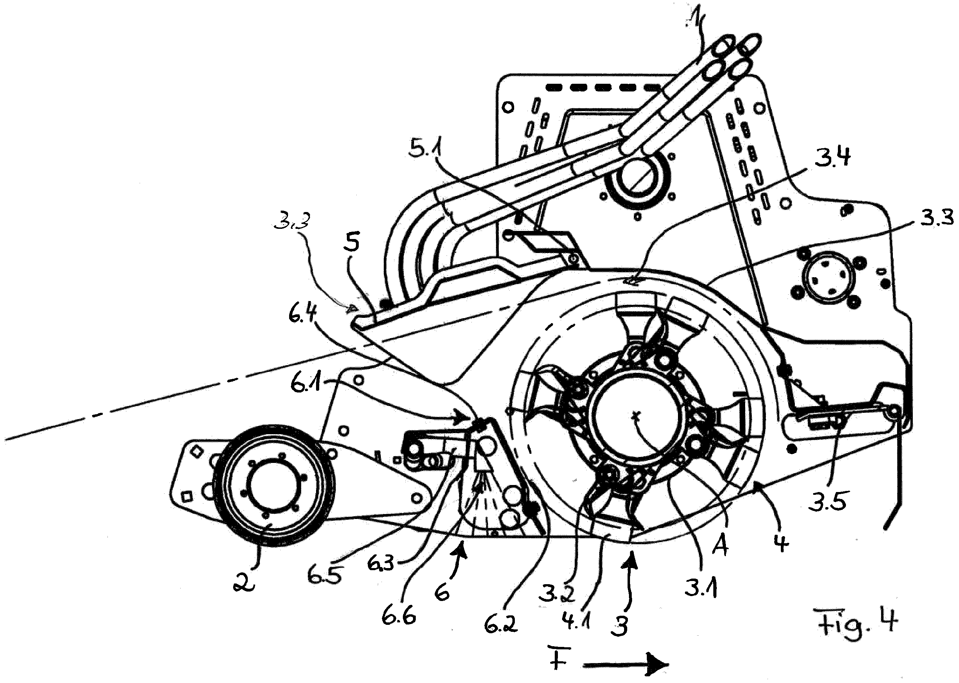

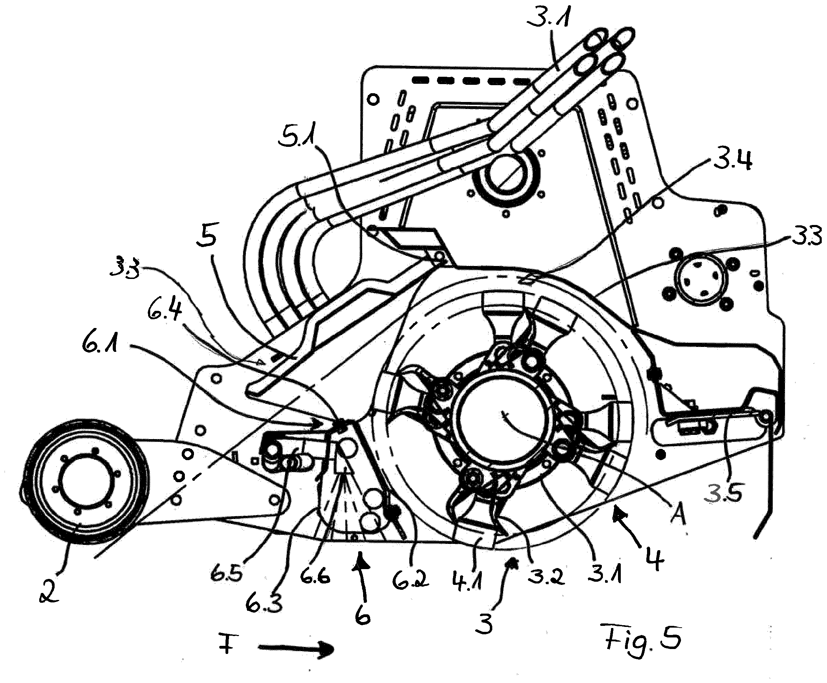

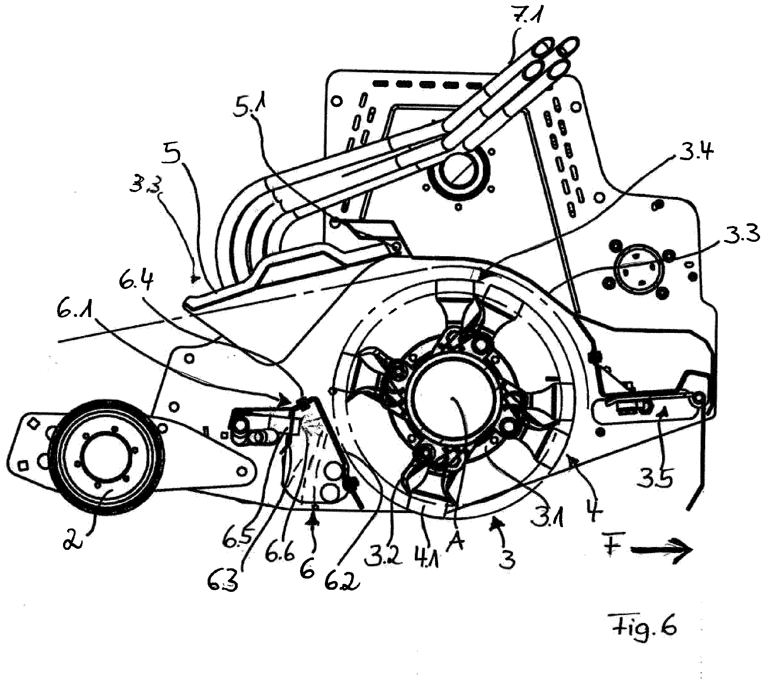

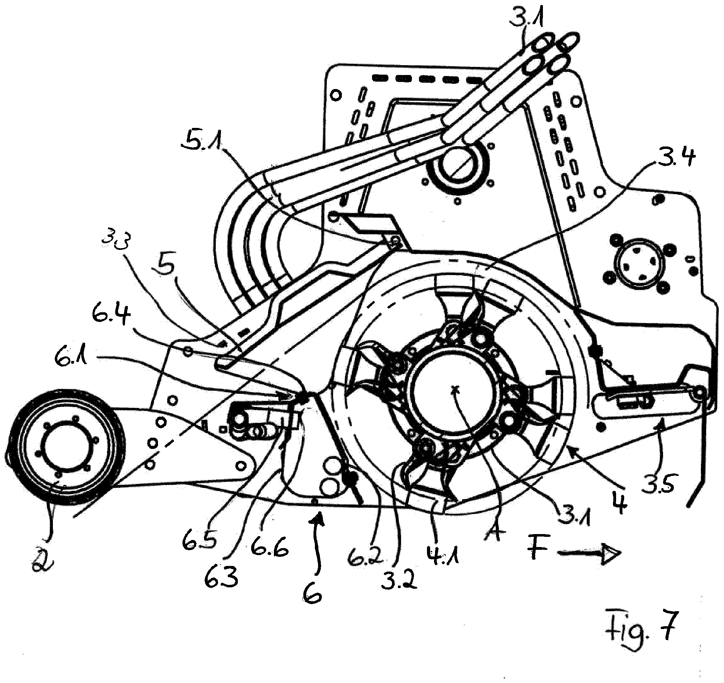

Oberhalb und in Fahrtrichtung teils hinter dem Rotor 3.1 ist in den dargestellten Ausführungsbeispielen ein um eine parallel zur Haupt-Querachse A verlaufende Schwenkachse 5.1 verschwenkbares Leitblech 5 als Teil der des Mulchergehäuses 3.3 angeordnet, dessen Hauptschwenkpositionen einerseits in den Fig. 4 und 6 und andererseits in den Fig. 5 und 7 dargestellt sind, wobei gegebenenfalls die Einstellung der Stützwalzen oder Stützräder 2 in Abhängigkeit von der Schwenkposition des Leichtblechs 5 erfolgen kann, wie dies in der schon genannten EP 2 997 802 A1 beschrieben ist.

In der oberen Schwenkposition des Leitblechs 5 der Fig. 4 und 6 wird das durch den Rotor gebildete Schnittgut der Grünmasse entlang dem Leitblech über die Stützwalzen oder Stützräder 2 hinausgefördert. Demgegenüber wird das Schnittgut in der Position der Fig. 5 und 7 des Leitblechs 5 in Fahrtrichtung vor den Rädern 2 und zwischen diesen und einer im Folgenden noch zu beschreibenden Ausbringeinrichtung für flüssiges und/oder körniges Ausbringgut unmittelbar hinter letzter auf dem bearbeiteten Boden abgelegt.

Wie schon angedeutet ist bei der erfindungsgemäßen Arbeitsvorrichtung 1 in Fahrtrichtung unmittelbar hinter dem Rotor 3.1, gegebenenfalls der kombinierten Mulch-Vertikutier-Einheit 3, 4 und mit Abstand vor den Stützwalzen oder Stützrädern 2 mindestens eine Ausbringeinrichtung 6 für körniges und/oder flüssiges Gut angeordnet. Bei auszubringendem flüssigem Gut kann es sich vorzugsweise um flüssigen Dünger (wie Gülle oder Harnstoff), chemische Pflanzenschutzmittel oder dergleichen handeln. Körniges auszubringendes Gut kann ebenfalls - pelletierter - Dünger, aber auch Saatgut oder dergleichen sein.

Bei der Ausgestaltung der Fig. 4 bis 7 weist die Ausbringeinrichtung 6 ein nach unten offenes Gehäuse oder einen nach unten offenen Tunnel 6.1 mit vorderer - dem Rotor 3.1 zugewandter - Seitenwand 6.2 und rückwärtiger - dem Rotor 3.1 abgewandten - Seitenwand 6.3 sowie einer oberen Deckwand 6.4 auf. Die Seitenwände 6.2, 6.3 und die Deckwand 6.4 erstrecken sich entlang dem Rotor 3.1 bzw. dessen Haupt-Querachse A. Die vordere Seitenwand 6.2 weist vorzugsweise einen endlichen Winkel ungleich 90° zur Vertikalen und damit auch zum Boden auf.

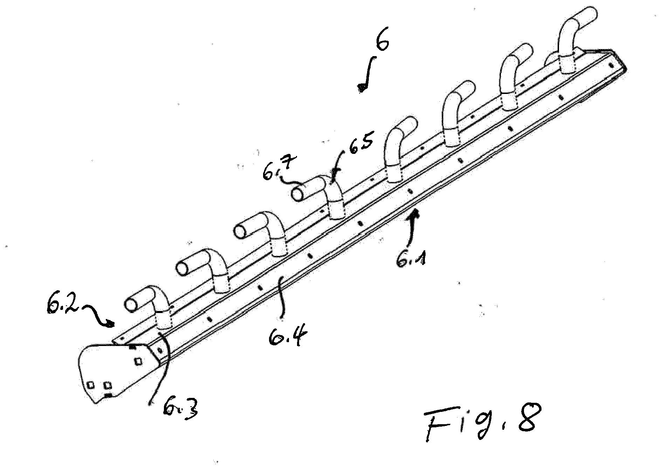

Die Ausbringeinrichtung 6 hat in der Ausgestaltung der Fig. 4, 5 und auch 8 Ausbringelemente 6.5 mit nach unten gerichteten Öffnungen 6.6, die also eine Öffnungsebene senkrecht zur Vertikalen und im Wesentlichen parallel zur Bodenebene haben. Die Ausbringelemente 6.5 können bei Ausbringung von flüssigem Gut insbesondere als Düsen ausgebildet sein. Derart kann flüssiges Ausbringgut als Aerosol versprüht werden. Mehrere Ausbringelemente 6.5 sind in Richtung der Achse A über die Breite der Vorrichtung 1 nebeneinander angeordnet, wie insbesondere in der Fig. 8 dargestellt ist. Die Ausbringelemente sind an ihrer außerhalb des Tunnels 6.1 gelegenen Eingangsseite mit Anschlussstutzen 6.7 zum Anschluss von Leitungen 7.1, wie Schläuchen, ausgebildet (Fig. 1, 2).

Wie in den Fig. 1 und 2 dargestellt ist, befinden sich auf der Vorrichtung 1 ein oder mehrere Gutbehälter 7, von denen im dargestellten Ausführungsbeispiel lediglich einer dargestellt ist. Die Gutbehälter 7 sind über die Leitungen 7.1, die vorzugsweise Schläuche sind, aber auch feste Rohre sein können, mit den Ausbringelementen 6.5 verbunden. Das Ausbringen kann durch Druckbeaufschlagung aus den Behältern 7 erfolgen, wozu diese gegebenenfalls entweder mit ein oder mehreren Druckzylindern oder über Pneumatikleitungen mit entsprechenden Druckgeneratoren des Zugfahrzeugs oder der Gutbehälter selbst verbunden sind.

Wenn mehrere, mindestens zwei Druckbehälter vorhanden sind, so können diese beispielsweise wechselweise mit aufeinanderfolgenden Ausbringelementen 6.5 verbunden sein und unterschiedliches Gut aufweisen, das dann gleichzeitig über jeweils benachbarte Ausbringelemente 6.5 ausgebracht wird. Dabei kann es sich auch im einen Druckbehälter um flüssiges Ausbringgut und im anderen um körniges Ausbringgut handeln, wie beispielsweise flüssiger und pelletierter Dünger.

Bei der Ausgestaltung der Fig. 4 und 5 und auch 8 wird das Ausbringgut direkt mittels der Öffnungen 6.6 auf den Boden ausgebracht.

Bei der Ausgestaltung der Fig. 6 und 7 ist die Öffnung 6.6 der Ausbringelemente 6.5 gegen die - wie beschrieben - geneigte vordere Seitenwand 6.2 des Gehäuses oder Tunnels 6.1 gerichtet und zwar unter einem endlichen Winkel ungleich 90° zur Ausrichtung der Seitenwand 6.3. Derart wird das Ausbringgut aus der Öffnung 6.6 des Ausbringelementes 6.5 gegen die Seitenwand 6.2 gesprüht oder geschleudert und durch diese nach unten zum Boden hin reflektiert, wobei gleichzeitig in Erstreckungsrichtung der Achse A der Vorrichtung 1 eine Auffächerung des aus den Ausbringelementen 6.5 austretenden Sprüh- oder Streustrahls erfolgt.

## Patentansprüche

1. Vorrichtung (1) zum Bearbeiten von Bodenflächen, wie Mulcher, insbesondere zur land- und/oder forstwirtschaftlichen Bodenbearbeitung und zur Grün- sowie Brachflächenpflege, mit einem Schlegel (3.2) aufweisenden Rotor (3.1), **dadurch gekennzeichnet, dass** neben dem Rotor (3.1) mindestens eine Ausbringeinrichtung (6) zum Ausbringen von flüssigem und/oder festem wie körnigem Ausbringgut angeordnet ist.

2. Vorrichtung nach Anspruch 1, **dadurch gekennzeichnet, dass** die mindestens eine Ausbringeinrichtung (6) innerhalb eines Mulchergehäuses (3.3) neben dem Rotor (3.1) angeordnet ist.

3. Vorrichtung nach Anspruch 1 oder 2, **dadurch gekennzeichnet, dass** die mindestens eine Ausbringeinrichtung (6) im Bereich der vertikalen Höhe des Rotors (3.1) angeordnet ist.

4. Vorrichtung nach einem der Ansprüche 1 bis 3, **dadurch gekennzeichnet, dass** die Ausbringeinrichtung (6) sich entlang einer Haupt-Querachse (A) des Rotors (3.1) erstreckt.

5. Vorrichtung nach einem der Ansprüche 1 bis 4, **dadurch gekennzeichnet, dass** die Ausbringeinrichtung (6) Ausbringelemente (6.5) mit Ausbringöffnungen (6.6) für das Ausbringgut aufweist.

6. Vorrichtung nach Anspruch 5, **dadurch gekennzeichnet, dass** die Ausbringöffnung (6.6) der Ausbringelemente (6.5) gegen Leitbleche (5) für von der Arbeitsvorrichtung (1) aufgenommene und zerkleinerte Grünmasse unter einem endlichen Winkel ungleich 0 und ungleich 90° gerichtet sind.

7. Vorrichtung nach einem der Ansprüche 1 bis 6, **dadurch gekennzeichnet, dass** die Ausbringeinrichtung (6) einen sich entlang der Haupt-Querachse (A) erstreckenden nach unten offenen Tunnel (6.1) mit vorderer und hinterer Seitenwand (6.2, 6.3) und oberer Deckwand (6.4) aufweist.

8. Vorrichtung nach einem der Ansprüche 5 bis 7, **dadurch gekennzeichnet, dass** die Ausbringöffnungen (6.6) der Ausbringelemente (6.5), insbesondere senkrecht zur Haupt-Querachse (A), eine seitlich gerichtete Hauptkomponente aufweisen.

9. Vorrichtung nach einem der Ansprüche 6 bis 8, **dadurch gekennzeichnet, dass** die Ausbringelemente (6.5) gegen die dem Rotor (3.1) zugewandte (vordere) Seitenwand (6.2) des nach unten offenen Tunnels (6.1) gerichtet sind.

10. Vorrichtung nach einem der Ansprüche 6 bis 8, **dadurch gekennzeichnet, dass** die Ausbringelemente (6.5) gegen die dem Rotor abgewandte (rückwärtige) Seiten (6.3) des Tunnels (6.1) gerichtet sind.

11. Vorrichtung nach einem der Ansprüche 6 bis 8, **dadurch gekennzeichnet, dass** die Ausbringöffnungen (6.6) der Ausbringelemente (6.5) eine nach unten insbesondere vertikal gerichtete Hauptkomponente aufweisen.

12. Vorrichtung nach einem der Ansprüche 5 bis 11, **dadurch gekennzeichnet, dass** die Ausbringöffnungen (6.6) der Ausbringelemente (6.5) als Düsen ausgebildet sind.

13. Vorrichtung nach einem der vorangehenden Ansprüche, **dadurch gekennzeichnet, dass** die Ausbringeinrichtung (6), insbesondere deren Ausbringelemente (6.5) über Leitungen (7.1), wie Schläuche, mit mindestens einem Vorratsbehälter (7) verbunden sind.

14. Vorrichtung nach dem Oberbegriff des Anspruchs 1, insbesondere nach einem der vorangehenden Ansprüche, **dadurch gekennzeichnet, dass** entlang einer Haupt-Querachse (A) des Rotors (3.1) zwischen dessen Schlegeln (3.2) sich radial über die Schlegel (3.2) hinauserstreckende Vertikutierelemente (4.1) angeordnet sind.

15. Vorrichtung nach Anspruch 14, **dadurch gekennzeichnet, dass** die Vertikutierelemente (4.1) sich senkrecht zur Haupt-Querachse (A) erstreckende Vertikutiermesser oder -schneiden aufweisen.

16. Vorrichtung nach Anspruch 14 oder 15, **dadurch gekennzeichnet, dass** an einem Vertikutierelement mindestens zwei, vorzugsweise drei parallel zueinander angeordnete, senkrecht zur Haupt-Querachse (A) gerichtete Vertikutiermesser/-schneiden (4.2) ausgebildet sind, die durch zumindest zum Teil geneigt zu dem Vertikutiermesser/-schneiden (4.2) verlaufende Verbindungsbereiche (4.3) miteinander verbunden sind.

17. Vorrichtung nach einem der Ansprüche 14 bis 16, **dadurch gekennzeichnet, dass** der Rotor (3.1) einen Mulch-Vertikutier-Rotor bildet.

18. Verfahren zum Bearbeiten von Bodenflächen, wie mulchen mittels eines Mulchers, insbesondere von land- und forstwirtschaftlicher Boden- sowie Grün- und Brachflächen mittels eines mit Schlegeln versehenen Rotors, **dadurch gekennzeichnet, dass** in einer einheitlichen Arbeitsfolge flüssiges oder festes, wie körniges Ausbringgut auf die Bodenfläche aufgebracht wird durch mindestens eine Ausbringeinrichtung neben dem Rotor und zerkleinerte Grünmasse als Mulchgut auf der Bodenfläche abgelegt wird.

19. Verfahren nach Anspruch 18, **dadurch gekennzeichnet, dass** zunächst das Ausbringgut auf der Bodenfläche aufgebracht wird und sofort anschließend die zerkleinerte Grünmasse als Mulchgut auf dem aufgebrachten Austragsgut zur Abdeckung desselben abgelegt wird.

20. Verfahren nach Anspruch 18, **dadurch gekennzeichnet, dass** zunächst das Mulchgut auf der Bodenfläche abgelegt wird und unmittelbar anschließend das Aufbringgut auf dem abgelegten Mulchgut aufgebracht wird.

21. Verfahren nach einem der Ansprüche 18 bis 20, **dadurch gekennzeichnet, dass** als körniges und/oder flüssiges Ausbringgut flüssiger oder fester wie körniger Dünger, chemische Pflanzenschutzmittel oder andere Werkstoffe, Saatgut oder dergleichen ausgebracht werden.
